(19) Europäisches Patentamt
European Patent Office
Office européen des brevets

(11) **EP 4 667 885 A1**

(12) **DEMANDE DE BREVET EUROPEEN**

(43) Date de publication:
**24.12.2025 Bulletin 2025/52**

(21) Numéro de dépôt: **25182226.8**

(22) Date de dépôt: **12.06.2025**

(51) Classification Internationale des Brevets (IPC):
*G01J 5/02* (2022.01)     *G01J 5/20* (2006.01)

(52) Classification Coopérative des Brevets (CPC):
**G01J 5/0225; G01J 5/024; G01J 5/20**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.06.2024 FR 2406451**

(71) Demandeur: **Commissariat à l'Energie Atomique et aux Energies Alternatives**
**75015 Paris (FR)**

(72) Inventeurs:
• **PEYSSONNEAUX, Olivier**
  **38054 GRENOBLE CEDEX 09 (FR)**

• **GOUDON, Valérie**
  **38054 GRENOBLE CEDEX 09 (FR)**
• **PERRILLAT-BOTTONET, Thomas**
  **38054 GRENOBLE CEDEX 09 (FR)**
• **LE COCQ, Mélanie**
  **38054 GRENOBLE CEDEX 09 (FR)**
• **VIALLE, Claire**
  **38054 GRENOBLE CEDEX 09 (FR)**
• **SCHEMBRI, Antoine**
  **38054 GRENOBLE CEDEX 09 (FR)**
• **CHAMIOT-MAITRAL, Gaelle**
  **38054 GRENOBLE CEDEX 09 (FR)**
• **YON, Jean-Jacques**
  **38054 GRENOBLE CEDEX 09 (FR)**

(74) Mandataire: **Santarelli**
**Tour Trinity**
**1 bis Place de la Défense**
**92400 Courbevoie (FR)**

(54) **DETECTEUR THERMIQUE COMPORTANT UNE MEMBRANE ABSORBANTE SUSPENDUE A ELECTRODE EN BOUCLE**

(57) L'invention porte sur un détecteur thermique comportant une membrane absorbante (50) suspendue au-dessus d'un substrat de lecture (10), laquelle comporte une couche thermistance (53) reposant sur deux électrodes (51, 52). La première électrode (51) est une piste en boucle, et la deuxième électrode (52) comporte une partie centrale (52.1) et une piste radiale (52.2). Par ailleurs, la couche thermistance (53) présente une zone périphérique de contact (53p) au contact de la première électrode (51) et une zone centrale de contact (53c) au contact de la partie centrale (52.1) ; la couche thermistance (53) étant électriquement isolée de la piste radiale (52.2).

Fig.3A

## Description

## DOMAINE TECHNIQUE

Le domaine de l'invention est celui des détecteurs thermiques d'un rayonnement électromagnétique, par exemple infrarouge ou térahertz, comportant une membrane absorbante qui est suspendue au-dessus d'un substrat de lecture et isolée thermiquement de celui-ci. L'invention s'applique notamment aux domaines, entre autres, de l'imagerie infrarouge, de la thermographie, de la détection de gaz.

## ÉTAT DE LA TECHNIQUE ANTÉRIEURE

Les détecteurs thermiques sont adaptés à détecter un rayonnement électromagnétique, par exemple infrarouge ou térahertz. Pour cela, ils peuvent comporter une membrane absorbante, suspendue au-dessus d'un substrat de lecture, comportant un absorbeur du rayonnement électromagnétique à détecter, et un transducteur thermomètre, par exemple une couche thermistance, couplé thermiquement à l'absorbeur.

Pour assurer l'isolation thermique de la couche thermistance vis-à-vis du substrat de lecture, la membrane absorbante est habituellement suspendue au-dessus du substrat de lecture par des piliers d'ancrage, et est isolée thermiquement de celui-ci par des bras de maintien. Ces piliers d'ancrage et bras de maintien présentent également une fonction électrique dans la mesure où ils permettent de connecter la couche thermistance au circuit de lecture situé dans le substrat.

Les bras de maintien peuvent être formés d'un empilement de deux couches minces isolantes, réalisées en un matériau thermiquement et électriquement isolant, entre lesquelles est située une couche mince conductrice réalisée en un matériau électriquement conducteur. Cette couche mince conductrice forme, dans la membrane absorbante, les électrodes permettant de connecter la couche thermistance au circuit de lecture.

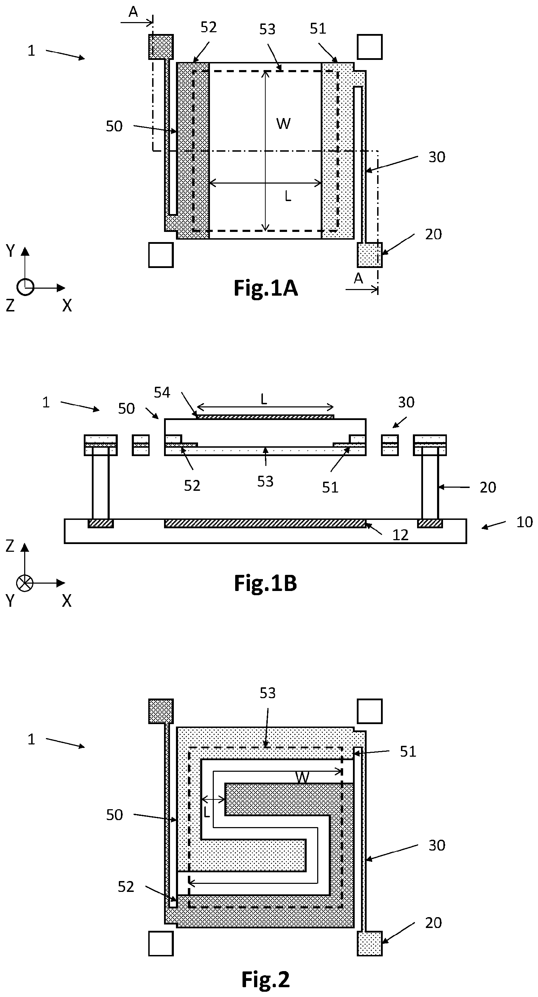

La figure 1A et la figure 1B sont des vues de dessus et en coupe transversale d'un détecteur thermique 1 selon un exemple de l'art antérieur, ici adapté à absorber un rayonnement infrarouge de la bande spectrale LWIR (*Long Wavelength Infrared,* en anglais) dont la longueur d'onde centrale est comprise entre 8μm et 14μm environ.

Le détecteur thermique 1 comporte une membrane absorbante 50 suspendue au-dessus d'un substrat de lecture 10 par des piliers d'ancrage 20 et isolée thermiquement de celui-ci par des bras de maintien et d'isolation thermique 30. Ces piliers d'ancrage 20 et bras de maintien 30 présentent également une fonction électrique en reliant électriquement la membrane absorbante 50 à un circuit de lecture situé dans le substrat de lecture 10.

La membrane absorbante 50 comporte ici une couche thermistance 53 au contact de deux électrodes 51, 52 en couche mince. La couche thermistance 53 est également en contact thermique avec un absorbeur 54 adapté à absorber le rayonnement électromagnétique à détecter. La couche thermistance 53 est réalisée en un matériau présentant une résistance électrique qui varie avec son échauffement. La membrane absorbante 50 est espacée verticalement d'un réflecteur 12 d'une distance déterminée de manière à former une cavité interférentielle quart d'onde optimisant l'absorption par l'absorbeur 54 du rayonnement électromagnétique à détecter.

Il est habituellement recherché de minimiser la résistance électrique de la couche thermistance. En effet, dans le cas notamment d'un détecteur thermique polarisé en tension, cela permet d'améliorer les performances, en termes notamment du paramètre NETD, qui correspond à la différence de température équivalente au bruit (NETD, *Noise Equivalent Temperature Difference,* en anglais).

Dans l'exemple des fig.1A et 1B, la couche thermistance 53 est une couche rectangulaire et les deux électrodes 51, 52 présentent des bordures intérieures rectilignes en vis-à-vis et parallèles entre elles. La couche thermistance 53 est alors au contact des électrodes au niveau de ces bordures. Ainsi, elle présente un volume polarisé électriquement de dimensions latérales L et W et d'épaisseur h. La dimension L est mesurée entre les zones de contact de la couche thermistance avec les électrodes, alors que la dimension W correspond à la largeur de la couche thermistance 53. Il apparaît que la dimension L est limitée par l'isolation inter-électrode (qui dépend notamment de la nature de la couche mince isolante sur laquelle repose la couche thermistance), et la largeur W est limitée par les dimensions du pixel de détection. Lorsque la dimension L est importante, le volume polarisé de la couche thermistance 53 est important, ce qui permet d'éviter d'avoir un bruit en 1/f trop élevé. En revanche, la résistance électrique R de la couche thermistance 53 n'est pas optimale, du fait notamment de la faible valeur de la largeur W qui ne peut s'étendre au-delà de dimension du pixel. Rappelons ici que la résistance électrique dépend du ratio L/W par la relation : $R = (\rho/h) \times (L/W)$, où $\rho$ est la résistivité du matériau de la couche thermistance, et h est l'épaisseur de celle-ci.

La figure 2 est une vue de dessus d'un détecteur thermique 1 selon un autre exemple de l'art antérieur. Ici, la couche thermistance 53 est toujours une couche rectangulaire, mais les deux électrodes 51, 52 présentent une forme interdigitée : l'espacement entre les électrodes 51, 52 présentent une forme en serpentin de dimension L et W. Ici, le ratio L/W est minimal, ce qui permet d'optimiser la résistance électrique R de la couche thermistance 53. En revanche, le volume polarisé de celle-ci est diminué par rapport à celui de la configuration parallélépipédique de la fig.1A, ce qui se traduit par un bruit en 1/f plus important.

## EXPOSÉ DE L'INVENTION

L'invention a pour objectif de remédier au moins en partie aux inconvénients de l'art antérieur, et plus particulièrement de proposer un détecteur thermique qui présente des performances améliorées en termes de paramètre NETD (ou NEP, *Noise Equivalent Power*), et notamment en termes de résistance électrique R de la couche thermistance et de bruit en 1/f.

Pour cela, l'objet de l'invention est un détecteur thermique comportant un substrat de lecture et une membrane absorbante. Celle-ci est suspendue au-dessus du substrat de lecture, et connectée électriquement et isolée thermiquement de celui-ci. Elle comporte une première et une deuxième électrodes en couche mince, et une couche thermistance située sur et au contact des électrodes.

Selon l'invention, la première électrode est une piste en boucle s'étendant le long de la périphérie de la membrane absorbante. La deuxième électrode est formée : d'une partie centrale, située au centre de la première électrode en boucle, et entourée en partie par celle-ci ; et d'une piste radiale allant de la partie centrale jusqu'à une bordure de la membrane absorbante. Par ailleurs, la couche thermistance présente : une zone périphérique de contact, s'étendant le long de la première électrode en boucle, où elle est au contact de celle-ci ; et une zone centrale de contact, située au centre de la zone périphérique de contact et entourée en partie par celle-ci, où elle est au contact de la partie centrale de la deuxième électrode, la couche thermistance étant électriquement isolée de la piste radiale.

Certains aspects préférés mais non limitatifs de ce détecteur thermique sont les suivants.

La zone périphérique de contact peut présenter une bordure intérieure parallèle et concentrique à une bordure extérieure de la zone centrale de contact.

La bordure intérieure de la zone périphérique de contact et la bordure extérieure de la zone centrale de contact peuvent être circulaires.

La couche thermistance peut présenter une forme circulaire et concentrique à la bordure intérieure de la zone périphérique de contact et à la bordure extérieure de la zone centrale de contact.

La première électrode peut présenter une bordure intérieure parallèle et concentrique à une bordure extérieure de la partie centrale de la deuxième électrode.

La bordure intérieure de la première électrode et la bordure extérieure de la partie centrale de la deuxième électrode peuvent être circulaires.

La membrane absorbante peut comporter une couche mince isolante située entre la couche thermistance et la piste radiale de la deuxième électrode.

La partie centrale de la deuxième électrode peut être située au centre de la membrane absorbante.

La couche thermistance et les électrodes peuvent être configurées de sorte qu'un paramètre $Z = R \times h / \rho$ est inférieur ou égale à 0.3, où R est la résistance électrique de la couche thermistance, h son épaisseur moyenne, et $\rho$ la résistivité du matériau de la couche thermistance.

La première électrode et la piste radiale de la deuxième électrode peuvent être coplanaires, la première électrode s'étendant en boucle ouverte qui comporte une ouverture dans laquelle s'étend la piste radiale.

La couche thermistance peut présenter une échancrure angulaire située à la perpendiculaire de l'ouverture de la première électrode.

La première électrode et la piste radiale de la deuxième électrode peuvent ne pas être coplanaires, la première électrode s'étendant en boucle fermée, la piste radiale étant espacée verticalement de la première électrode par une couche mince isolante intercalaire.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A et la figure 1B, déjà décrites, sont des vues schématiques et partielles, respectivement en vue de dessus et en coupe transversale selon la ligne AA, d'un détecteur thermique selon un exemple de l'art antérieur où la couche thermistance et des électrodes présentent une configuration parallélépipédique ;

la figure 2, déjà décrite, est une vue schématique et partielle, en coupe transversale, d'un détecteur thermique selon un autre exemple de l'art antérieur où les électrodes de la membrane absorbante présentent une configuration interdigitée ;

la figure 3A et la figure 3B sont des vues schématiques et partielles, respectivement en vue de dessus et en coupe transversale selon la ligne AA, d'un détecteur thermique selon un mode de réalisation où l'une des électrodes présente une configuration en boucle ouverte annulaire ;

la figure 4A et la figure 4B sont des vues schématiques et partielles, respectivement en vue de dessus et en coupe transversale selon la ligne AA, d'un détecteur thermique selon une variante de réalisation où l'absorbeur est distinct des électrodes, et où la couche thermistance présente une variation d'épaisseur ;

la figure 5A est une vue de dessus, schématique et partielle, d'un détecteur thermique selon un autre mode de réalisation où la couche thermistance présente une échancrure angulaire ;

la figure 5B illustre un exemple de domaines accessibles, en fonction de la résistance électrique R et du volume polarisé V de la couche thermistance, dans le cas d'une configuration parallélépipédique et dans le cas de deux configurations en boucle ouverte pour un matériau thermistance de résistivité et d'épaisseur donnée ;

la figure 6 est une vue de dessus, schématique et partielle, d'un détecteur thermique selon un autre mode de réalisation où l'une des électrodes présente une configuration en boucle ouverte rectangulaire ;

la figure 7A et la figure 7B sont des vues schématiques et partielles, respectivement en vue de dessus et en coupe transversale selon la ligne AA, d'un détecteur thermique selon un autre mode de réalisation où l'une des électrodes présente une configuration en boucle fermée.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un détecteur thermique d'un rayonnement électromagnétique, par exemple infrarouge ou térahertz, notamment dans la gamme LWIR (8-14$\mu$m), comportant une membrane absorbante suspendue au-dessus d'un substrat de lecture. La membrane absorbante est thermiquement isolée de celui-ci et électriquement connectée à un circuit de lecture situé dans le substrat. Elle comporte notamment une couche thermistance et deux électrodes en couche mince qui assure la polarisation électrique de celle-ci.

Le détecteur thermique selon l'invention présente des performances améliorées, notamment en termes de différence de température équivalente au bruit (NETD, pour *Noise Equivalent Temperature Difference*, en anglais). Notons que les performances peuvent ici être évaluées également en termes de puissance équivalente au bruit (NEP, pour *Noise Equivalent Power*).

Pour cela, la première électrode est une piste en boucle (ouverte ou fermée), qui s'étend le long de la périphérie de la membrane absorbante. Elle s'étend le long de la périphérie (i.e. du pourtour) de la membrane absorbante, et de préférence le long de tous les côtés de la membrane absorbante. La périphérie (pourtour) de la membrane absorbante est la ligne qui délimite la membrane dans un plan XY. La première électrode peut déboucher sur la périphérie ou en être espacée dans le plan XY. Par "piste", on entend une couche mince en forme de bande, c'est-à-dire que sa longueur est supérieure à sa largeur. La piste étant une couche mince, son épaisseur est inférieure à sa longueur et à sa largeur. Par ailleurs, la piste s'étend en forme de boucle, c'est-à-dire qu'elle s'étend longitudinalement autour d'une zone centrale (d'où la forme de boucle ou d'anneau).

De plus, la deuxième électrode est formée d'une partie centrale, située au centre de la première électrode en boucle, et entourée en partie par celle-ci (dans un même plan ou dans un plan différent). Par "située au centre", on entend que la partie centrale est située à une position moyenne à chaque point d'une bordure intérieure de la première électrode en boucle. La deuxième électrode est formée également d'une piste radiale et reliant la partie centrale jusqu'à une bordure de la membrane absorbante (cette bordure participe à définir la périphérie/pourtour de la membrane). Elle assure la jonction électrique entre la partie centrale et le bras de maintien dans lequel s'étend la couche mince conductrice de la deuxième électrode.

La première électrode en boucle peut présenter une configuration en boucle ouverte ou en boucle fermée :

○ Dans le cas d'une boucle ouverte, la première électrode n'est pas refermée sur elle-même : elle présente une ouverture dite angulaire qui s'étend sur toute la largeur de la piste en boucle. Dans cette configuration, la première électrode et la deuxième électrode (partie centrale et piste radiale) peuvent être coplanaires : la piste radiale de la deuxième électrode s'étend alors dans l'ouverture angulaire de la première électrode en boucle ouverte.

○ Dans le cas d'une boucle fermée, la première électrode est refermée sur elle-même, et ne présente donc pas d'ouverture angulaire. Pour éviter tout court-circuit entre les électrodes, la piste radiale de la deuxième électrode n'est pas coplanaire avec la première électrode en boucle fermée et s'étend au-dessus ou en-dessous de la première électrode. De préférence, la partie centrale de la deuxième électrode est coplanaire avec la piste radiale (et n'est donc pas coplanaire avec la première électrode).

Enfin, la couche thermistance s'étend sur et au contact des deux électrodes. Plus précisément, elle présente une zone périphérique de contact, qui s'étend le long de la première électrode en boucle, où elle est au contact de celle-ci. Elle présente également une zone centrale de contact, située au centre de la zone périphérique de contact et entourée en partie par la zone périphérique de contact, où elle est au contact de la partie centrale de la deuxième électrode.

Ainsi, cette configuration géométrique des deux électrodes et de la couche thermistance, où la première électrode est en boucle ouverte ou fermée, permet d'optimiser la résistance électrique R de la couche thermistance, tout en gardant un volume V suffisant de la couche thermistance polarisée électriquement pour ne pas générer davantage de bruit en 1/f. On optimise ainsi le NETD et donc les performances du détecteur thermique.

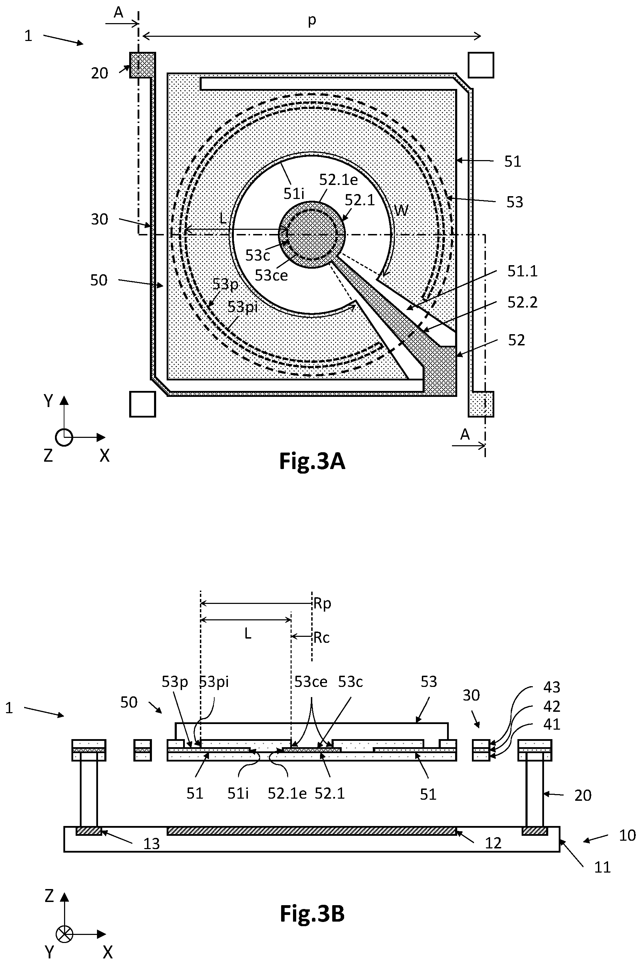

La figure 3A et la figure 3B sont des vues schématique et partielle, respectivement en vue de dessus et en coupe transversale selon la ligne de coupe AA, d'un détecteur thermique 1 selon un mode de réalisation. Dans cet exemple, la première électrode 51 s'étend en boucle ouverte. Elle est donc coplanaire avec la piste radiale 52.2 (et avec la partie centrale 52.1) de la deuxième électrode 52.

On définit ici et pour la suite de la description un repère direct tridimensionnel XYZ, où le plan XY est sensiblement parallèle au plan d'un substrat de lecture 10 du détecteur thermique 1, l'axe Z étant orienté suivant une direction sensiblement orthogonale au plan XY, du substrat de lecture 10 vers la membrane absorbante 50. Par ailleurs, les termes « inférieur » et « supérieur » s'entendent comme étant relatifs à un positionnement croissant lorsqu'on s'éloigne du substrat de lecture 10 suivant la direction +Z.

Le détecteur thermique 1 peut appartenir à une matrice de détecteurs thermiques identiques, agencés de préférence de manière périodique dans un plan XY. Chaque détecteur thermique forme un pixel de détection. Les membranes absorbantes reposent alors sur un même substrat de lecture. Dans le cas d'une détection infrarouge, la matrice peut comporter par exemple entre $60\times80$ et $1280\times1024$ pixels, avec un pas de répétition p qui peut être de l'ordre de $10\mu m$ par exemple.

Le détecteur thermique 1 comporte une membrane absorbante 50, suspendue au-dessus du substrat de lecture 10 par des piliers d'ancrage 20, et isolée thermiquement de celui-ci par des bras de maintien 30. Les piliers d'ancrage 20 et bras de maintien 30 assurent également une fonction de connexion électrique de la couche thermistance 53 au circuit de lecture contenu dans le substrat de lecture 10.

Le substrat de lecture 10 est formé d'un substrat support 11 contenant le circuit de lecture (non représenté) adapté à commander et lire la couche thermistance 53. Le circuit de lecture peut se présenter sous la forme d'un circuit intégré CMOS. Il comporte ainsi des éléments microélectroniques actifs (par exemple des transistors, diodes, amplificateurs...) et des niveaux d'interconnexion électrique. Ici, seul le niveau d'interconnexion supérieur est représenté. Les niveaux d'interconnexion sont formés de lignes ou portions conductrices connectées verticalement par des vias conducteurs (non représentés). Les portions conductrices et les vias conducteurs peuvent être réalisés à base de cuivre, d'aluminium et/ou de tungstène, entre autres, par exemple au moyen d'un procédé damascène dans lequel on remplit des tranchées réalisées dans des couches isolantes inter-métal. Celles-ci peuvent être réalisées sur la base d'oxyde de silicium ($SiO_2$, SiOF, SiOC, SiOCH...) et éventuellement de nitrure de silicium SiN.

Ici, des portions conductrices du niveau d'interconnexion supérieur forment un réflecteur 12 ainsi que des portions de connexion 13 des piliers d'ancrage 20. Le réflecteur 12 est adapté à réfléchir le rayonnement électromagnétique à détecter en direction de la membrane absorbante 50, et s'étend donc dans le plan XY en regard de celle-ci (et plus précisément en regard de l'absorbeur de la membrane absorbante 50). L'espacement vertical entre la membrane absorbante 50 (et plus précisément l'absorbeur) et le réflecteur 12 permet de former une cavité optique interférentielle quart d'onde qui maximise l'absorption du rayonnement électromagnétique à détecter.

Une couche barrière (non représentée), par exemple en SiN, peut recouvrir le substrat support 11 et la ligne d'interconnexion supérieure. Elle permet d'éviter la diffusion du métal des portions de la ligne d'interconnexion supérieure vers les couches supérieures à venir. Enfin, une couche de protection (non représentée) peut recouvrir la couche barrière, et donc également le substrat de support 11 et le circuit de lecture (avec les couches isolantes inter-métal et les lignes d'interconnexion). Cette couche de protection est réalisée en un matériau sensiblement inerte à un agent de gravure utilisé ultérieurement pour supprimer la ou les couches sacrificielles (par exemple de l'acide fluorhydrique en phase vapeur). Elle peut être réalisée par exemple en $Al_2O_3$ d'une épaisseur de 20 à 40nm environ, ou en AIN d'une épaisseur de 100nm environ.

Les piliers d'ancrage 20 s'étendent suivant la direction +Z de manière à espacer la membrane absorbante 50 d'une distance prédéfinie vis-à-vis du substrat de lecture 10 et du réflecteur 12. Ils sont réalisés en un matériau électriquement conducteur, par exemple à base de tungstène ou de cuivre. Ils sont formés d'un vias conducteurs surmontés chacun d'un plot conducteur supérieur, par exemple en TiN d'une épaisseur de 20 à 50nm environ. Ce plot permet d'éviter la diffusion du matériau des vias conducteurs. Chaque via conducteur peut également comporter une couche mince (non représentée), s'étendant à la périphérie du via dans le plan XY et réalisée par exemple en TiN, permettant d'éviter la diffusion du matériau des vias.

Les bras de maintien 30 sont formés d'un empilement d'au moins une couche mince isolante 41, et d'une couche mince conductrice 42 réalisée en un matériau électriquement conducteur. Dans cet exemple, l'empilement comporte une couche mince isolante inférieure 41, une couche mince conductrice 42, et une couche mince isolante supérieure 43. Cet empilement se retrouve également sur les piliers d'ancrage 20 ainsi que dans la membrane absorbante 50.

Les couches minces isolantes 41, 43 sont de préférence réalisées en le même matériau, par exemple en silicium amorphe, nitrure de silicium, nitrure d'aluminium, entre autres, et présentent de préférence une même épaisseur. Cette épaisseur peut être comprise entre 10nm et 100nm, de préférence entre 30nm et 70nm, par exemple égale à 50nm environ. Elle peut être ajustée au besoin, en fonction de la largeur et de la longueur des bras de maintien 30, de manière à leur garantir une bonne stabilité mécanique.

La couche mince conductrice 42 s'étend dans les bras de maintien 30 et en partie dans la membrane absorbante 50 pour y former les deux électrodes 51, 52. Elle est réalisée en un matériau électriquement conducteur, par exemple en au moins un matériau métallique comme le TiN ou le NiCr, entre autres, et présente une épaisseur par exemple comprise entre 5 et 15nm, de préférence entre 6 et 10nm.

La membrane absorbante 50 comporte une couche thermistance 53, c'est-à-dire une couche en un matériau dont la résistance électrique varie en fonction de son échauffement thermique, les deux électrodes de polarisation 51, 52, et au moins un absorbeur (formé ici des électrodes 51, 52) couplé thermiquement à la couche thermistance 53.

La membrane absorbante 50 comporte une portion de l'empilement des deux couches minces isolantes 41, 43 et de la couche mince conductrice 42. Ici, la couche mince isolante inférieure 41 forme la couche support de la membrane absorbante 50.

Les électrodes de polarisation 51, 52 sont ici deux parties distinctes de la même couche mince conductrice 42. Elles sont ici coplanaires. Elles présentent une géométrie où la première électrode 51 forme une piste en boucle ouverte qui entoure une partie centrale 52.1 de la deuxième électrode 52. De plus, l'ouverture angulaire 51.1 de la première électrode laisse passer la piste radiale 52.2 de la deuxième électrode 52.

La première électrode 51 s'étend le long de la périphérie de la membrane absorbante 50 et présente une forme de piste en boucle ouverte. Elle entoure partiellement la partie centrale 52.1 de la deuxième électrode 52 (dans un même plan XY) et laisse passer, au travers de son ouverture angulaire 51.1, la piste radiale 52.2 de celle-ci. L'ouverture angulaire 51.1 présente une dimension suffisante pour assurer une bonne isolation électrique avec la piste radiale 52.2 de la deuxième électrode 52.

La première électrode 51 est délimitée dans le plan XY par une bordure intérieure 51i, orientée vers la partie centrale 52.1 de la deuxième électrode 52, et une bordure extérieure opposée qui est ici identique à la bordure de la membrane absorbante 50. Une bordure latérale relie les deux bordures intérieure et extérieure, et délimite latéralement (suivant une direction orthoradiale) l'ouverture angulaire 51.1 de la piste en boucle. La bordure intérieure 51i présente de préférence une forme circulaire, mais d'autres formes sont possibles, comme une forme polygonale, par exemple rectangulaire ou carrée.

La deuxième électrode 52 est formée d'une partie centrale 52.1 et d'une piste radiale 52.2. La partie centrale 52.1 est située au centre de la première électrode 51 en boucle ouverte, et est ici également située au centre de la membrane absorbante 50. Elle est donc en partie entourée par la première électrode 51. Elle est délimitée dans le plan XY par une bordure extérieure 52.1e. Celle-ci présente de préférence une forme circulaire, mais alternativement peut présenter une forme polygonale, par exemple rectangulaire ou carrée. Sa forme est de préférence corrélée à celle de la bordure intérieure 51i de la première électrode 51, de sorte que la bordure extérieure 52.1e est parallèle à la bordure intérieure 51i. Autrement dit, la bordure extérieure 52.1e et la bordure intérieure 51i sont de préférence toutes deux circulaires, ou, alternativement, polygonales et parallèles entre elles.

La piste radiale 52.2 s'étend longitudinalement dans l'ouverture angulaire 51.1 de la première électrode 51, allant de la partie centrale 52.1 jusqu'à une jonction de la membrane absorbante 50 avec le bras de maintien 30 associé à la deuxième électrode 52. Il s'agit d'une piste, ou une bande, dans le sens où sa longueur est supérieure à sa largeur. De préférence elle s'étend de manière rectiligne. Elle peut présenter une largeur constante ou, comme ici, une largeur qui augmente à mesure que l'on s'éloigne de la partie centrale 52.1. Cette piste radiale 52.2 est isolée électriquement de la couche thermistance 53 : dans cet exemple, la couche thermistance 53 recouvre la piste radiale 52.2 mais est espacée (et donc isolée électriquement) de celle-ci par une portion de la couche mince isolante supérieure 43.

La couche mince isolante supérieure 43 recouvre ici les électrodes 51, 52 ainsi que l'espacement entre celles-ci. Elle s'étend de manière continue, dans le plan XY, dans les bras de maintien 30 jusqu'à la membrane absorbante 50, et présente une épaisseur suffisante pour assurer une bonne stabilité mécanique de la membrane absorbante. Cette épaisseur peut ainsi être comprise entre 15nm et 100nm, de préférence entre 30nm et 70nm, par exemple égale à 50nm environ. La couche mince isolante supérieure 43 présente des ouvertures traversantes débouchant sur les électrodes 51, 52, de manière à permettre à la couche thermistance 53 de venir au contact des électrodes.

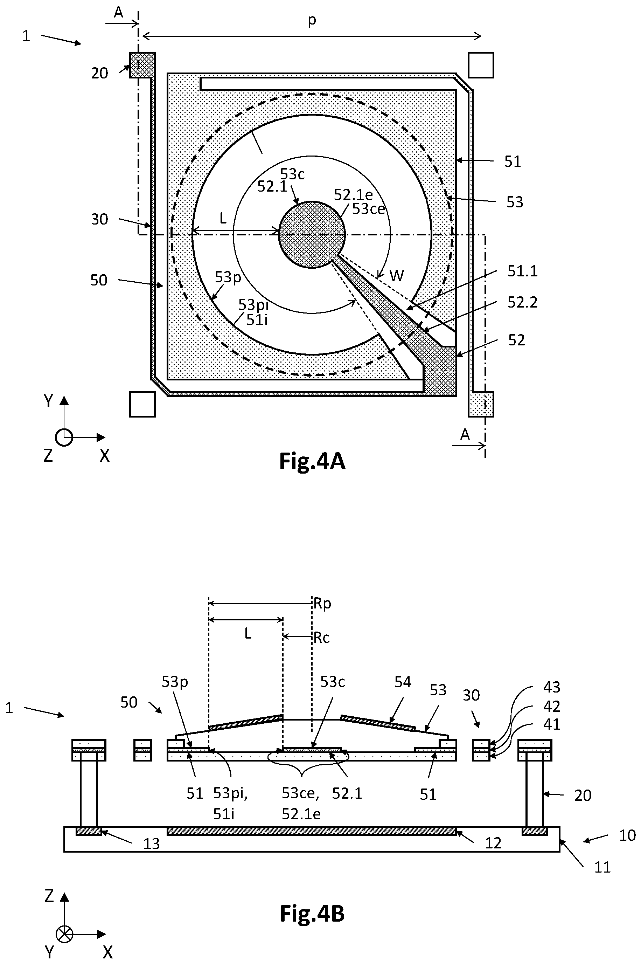

Notons toutefois, comme l'illustre la fig.4B (décrite plus loin), que la couche mince isolante supérieure 43 peut être omise dans l'espacement radial inter-électrode si l'espacement est suffisant et si la résistivité électrique de la couche mince isolante inférieure 41 et celle de la couche thermistance 53 sont suffisantes pour assurer une bonne isolation électrique entre les deux électrodes 51, 52. Elle peut ainsi être absente entre les bordures intérieure 51i et extérieure 52.1e, mais être présente dans l'ouverture angulaire 51.1 de la première électrode 51 en boucle ouverte, c'est-à-dire dans l'espacement orthoradial inter-électrode.

La couche thermistance 53 (représentée en trait pointillé sur la fig.3A) est ici un matériau d'une épaisseur par exemple de l'ordre de quelques dizaines à centaines de nanomètres. Il peut s'agir d'un matériau à base d'un oxyde de vanadium ou de titane, de silicium amorphe, ou d'un composé silicium germanium amorphe. Dans le cas du silicium germanium, de l'oxyde de vanadium ou de titane, des couches supplémentaires de protection contre l'HF vapeur sont prévues (non représentées ici, pour privilégier la clarté des figures).

La résistivité électrique de la couche thermistance 53 en silicium amorphe est comprise par exemple entre $60\Omega.cm$ et $1000\Omega.cm$, par exemple égale à $60\Omega.cm$ ou à $75\Omega.cm$ environ. Dans le cas du silicium germanium, la résistivité électrique est comprise par exemple entre $10\Omega.cm$ et $75\Omega.cm$, par exemple égale à $10\Omega.cm$ (dans le cas d'un mode de lecture de type rolling shutter). La résistivité électrique peut être ajustée par dopage à la croissance, et par la proportion atomique de germanium le cas échéant. L'épaisseur d'une telle couche thermistance 53 peut être de l'ordre de quelques dizaines à centaines de nanomètres.

La couche thermistance 53 s'étend ici sur la couche mince isolante supérieure 43. Elle vient au contact des deux électrodes 51, 52 au travers d'ouvertures traversantes. Ainsi, elle présente une zone périphérique de contact 53p qui s'étend le long de la première électrode 51 en boucle ouverte, où elle vient au contact de celle-ci. Elle s'étend de préférence sur sensiblement toute la longueur de la première électrode 51.

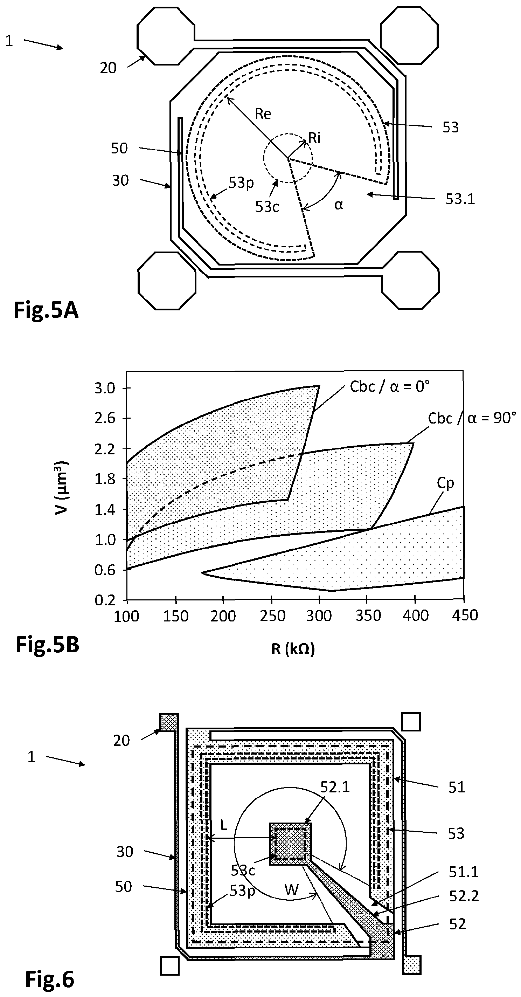

La couche thermistance 53 présente également une zone centrale de contact 53c, située au centre de la zone périphérique de contact 53p et entourée en partie par celle-ci, où elle vient au contact de la partie centrale 52.1 de la deuxième électrode 52. La couche thermistance 53 est isolée électriquement de la piste radiale 52.2. Pour cela, dans la mesure où la couche thermistance 53 présente ici une forme circulaire continue (sans échancrure angulaire comme illustré sur la fig.5A), une portion de la couche mince isolante supérieure 43 recouvre entièrement la piste radiale 52.2 de manière à éviter tout contact de la couche thermistance 53 avec celle-ci.

De préférence, la bordure extérieure 53ce de la zone centrale de contact 53c est parallèle et concentrique à la bordure intérieure 53pi de la zone périphérique de contact 53p. Ici, les bordures 53ce et 53pi sont avantageusement circulaires. De préférence, la bordure 53ce de la zone centrale 53c, la bordure 52.1e de la partie centrale 52.1, la bordure 51i de la première électrode 51, et la bordure 53pi de la zone périphérique 53p sont parallèles et concentriques entre elles. Ici, elles sont avantageusement circulaires. La couche thermistance 53 présente alors, de préférence, une forme circulaire et concentrique à la bordure intérieure 53pi de la zone périphérique de contact 53p et à la bordure extérieure 53ce de la zone centrale de contact 53c.

On peut définir une distance radiale minimale L pour laquelle la couche thermistance est polarisée électriquement. Cette distance radiale L est définie entre la bordure intérieure 53pi de la zone périphérique de contact 53p, ici de forme circulaire et de rayon Rp, et la bordure extérieure 53ce de la zone centrale de contact 53c, ici de forme circulaire et de rayon Rc, telle que L = Rp - Rc. On peut également définir une distance orthoradiale moyenne W, pour laquelle la couche thermistance 53 est également polarisée électriquement. Cette distance W est parallèle aux bordures 53pi et 53ce et est mesurée à une position correspondant à Rc+L/2, c'est-à-dire en une position radiale centrale du volume polarisé de la couche thermistance 53.

Par ailleurs, l'épaisseur h de la couche thermistance peut être constante suivant une direction radiale, comme illustré sur la fig.3B. En variante, comme décrit plus loin en référence à la fig.4B, elle peut être avantageusement plus élevée au niveau de la zone centrale de contact 53c et diminuer à mesure que l'on s'en éloigne. La couche thermistance 53 présente alors une forme de dôme.

Une couche supérieure de protection (non représentée) peut recouvrir la couche thermistance 53, pour assurer une protection de celui-ci vis-à-vis d'éventuelles contaminations ou dégradations lors des étapes du procédé de fabrication, comme par exemple l'étape de retrait (*stripping* en anglais) de la résine photosensible utilisée pour localiser la gravure de la couche thermistance 53. Elle peut être réalisée en un matériau électriquement isolant, par exemple un matériau diélectrique tel qu'un oxyde, nitrure ou oxynitrure de silicium, voire de l'alumine, entre autres, d'une épaisseur de quelques dizaines de nanomètres.

Par ailleurs, la membrane absorbante 50 comporte un absorbeur du rayonnement électromagnétique à détecter. Cet absorbeur est en contact thermique avec la couche thermistance 53. Il s'agit d'un absorbeur en couche mince (absorbeur de Salisbury). Le matériau et l'épaisseur de l'absorbeur sont de préférence choisis de sorte que sa résistance de surface est sensiblement égale à l'impédance du vide. Dans cet exemple, cet absorbeur est formé par les deux électrodes 51, 52. En variante, comme décrit plus loin en référence à la fig.4B, cet absorbeur peut être une couche mince située entre la couche thermistance 53 et la couche supérieure de protection. Elle s'étend alors dans le plan XY sans se trouver à la perpendiculaire des électrodes sous-jacentes.

Ainsi, le détecteur thermique 1 présente des performances améliorées, notamment en termes de NETD, du fait que la configuration géométrique dite en boucle (ici en boucle ouverte) de l'électrode 51, et donc de la zone de contact périphérique 53p de la couche thermistance 53, permet d'optimiser la résistance électrique R de la couche thermistance 53, tout en gardant un volume polarisé V suffisant pour ne pas générer davantage de bruit en 1/f.

En effet, cette configuration permet d'obtenir une dimension W bien supérieure à celle du détecteur thermique de l'exemple de la fig.1A, tout en étant en mesure d'optimiser la dimension L de manière à garder un volume polarisé de la couche thermistance 53 suffisant en termes de bruit en 1/f. Par ailleurs, puisqu'il est donc possible de conserver un volume polarisé important par le choix du ratio L/W, l'épaisseur de la couche thermistance 53 peut être réduite par rapport aux valeurs habituelles, ce qui permet de réduire la durée de l'étape de dépôt de la couche thermistance et donc de diminuer les coûts de production.

La figure 4A et la figure 4B sont des vues schématique et partielle, respectivement en vue de dessus et en coupe transversale selon la ligne de coupe AA, d'un détecteur thermique 1 selon une variante de réalisation.

Le détecteur thermique 1 se distingue ici de celui des fig.3A et 3B essentiellement en ce que les électrodes 51, 52 n'assurent pas le rôle d'absorbeur du rayonnement électromagnétique à détecter. La distance L est alors plus importante que dans le cas de la fig.3A, et un absorbeur 54 en couche mince est situé au-dessus de la couche thermistance 53. Il s'étend de manière à ne pas se trouver à la perpendiculaire des électrodes sous-jacentes.

La distance L étant plus importante, la couche mince isolante 43 peut être absente dans l'espacement radial inter-électrode. En revanche, elle reste présente dans l'espacement orthoradial inter-électrode, c'est-à-dire dans l'ouverture angulaire 51.1 de la première électrode 51, de manière à éviter tout court-circuit entre les électrodes 51 et 52.

Dans la mesure où la couche thermistance 53 recouvre et est au contact de toute la partie centrale 52.1 de la deuxième électrode 52, la zone centrale de contact 53c correspond donc à la surface de la partie centrale 52.1. Les bordures 52.1e et 53ce sont donc confondues.

Par ailleurs, la couche thermistance 53 recouvre et est au contact de toute la périphérie intérieure de la première électrode 51. La zone périphérique de contact 53p correspond donc à la surface recouverte de la première électrode 51 à partir de la bordure 51i. Les bordures 51i et 53pi sont donc également confondues.

Enfin, la couche thermistance 53 présente une diminution radiale d'épaisseur h, à partir de la zone centrale 53c où elle présente une valeur haute, jusqu'à la zone périphérique 53p où elle présente une valeur plus faible. Pour obtenir une telle forme de la couche thermistance 53, la technique de lithographie en niveau de gris peut être utilisée. Cette variation radiale d'épaisseur permet de limiter la hausse de la densité de courant au centre de la couche thermistance 53, et donc de limiter l'augmentation locale du bruit en 1/f.

La figure 5A est une vue de dessus, schématique et partielle, d'un détecteur thermique 1 similaire à celui de la fig.3A. Il s'en distingue essentiellement en ce que la couche thermistance 53 n'est pas en forme de cylindre complet, mais présente une échancrure 53.1 dans le plan XY sur un secteur angulaire d'angle α. Cette échancrure angulaire 53.1 est située au-dessus de la piste radiale 52.2 de la deuxième électrode 52, et au-dessus (à la perpendiculaire) de l'ouverture angulaire 51.1 de la première électrode 51. Elle est avantageuse pour limiter les risques de court-circuit entre les deux électrodes 51, 52 dans l'espacement orthoradial inter-électrode, en particulier en l'absence d'une portion de la couche mince isolante supérieure 43 dans cette zone. Dans le cas où l'angle α est nul, cette configuration est alors identique à celle de la fig.3A.

Il est possible d'estimer le volume polarisé V de la couche thermistance d'une épaisseur constante h, ainsi que la résistance électrique R associée, par les relations suivantes :

$$ V = \left(1 - \frac{\alpha}{2\pi}\right) \times \pi \times (Rp^2 - Rc^2) \times h $$

$$ R = \frac{\rho}{h \times (2\pi - \alpha)} \times \ln\frac{Rp}{Rc} $$

La figure 5B illustre un exemple de domaines accessibles, en termes de volume polarisé V et de résistance électrique R, pour la configuration parallélépipédique de la fig.1A (notée Cp) et pour la configuration en boucle circulaire de la fig.5A (notée Cbc). Dans cet exemple, la couche thermistance présente une résistivité électrique $\rho$ égale à 10 Ω.cm, et une épaisseur h constante égale à 80 nm. On considère ici que la dimension L peut varier entre 1 et 4 $\mu$m, que la dimension W peut varier entre 4 et 7 $\mu$m, que le diamètre Rp peut varier entre 2.5 et 3.5 $\mu$m, et enfin que le diamètre Rc peut varier entre 500 nm et 2 $\mu$m.

Il apparaît que la configuration en boucle circulaire Cpc permet d'adresser des couples de valeurs (R,V) inaccessibles avec la configuration parallélépipédique Cp, tant en termes de résistance électrique R que de volume polarisé V. Ainsi, dans le domaine accessible de la configuration parallélépipédique Cp, la résistance électrique R reste élevée. Elle ne peut descendre ici en dessous de 175 kΩ qu'au prix d'un volume polarisé V relativement faible, ici de 0.6 $\mu$m³. A l'inverse, il est possible d'augmenter le volume polarisé jusqu'à 1.4 $\mu$m³ seulement, et cela se traduit par une augmentation de la résistance électrique jusqu'à 450 kΩ. En revanche, dans le cas d'une configuration en boucle circulaire Cbc avec un angle α nul, le domaine accessible couvre les faibles valeurs de la résistance électrique R, ici jusqu'à 100 kΩ pour un volume polarisé qui peut aller jusqu'à 2 $\mu$m³. Il est également possible d'aller jusqu'à un volume polarisé 3 $\mu$m³ pour une résistance électrique de 300 kΩ.

Par ailleurs, si l'on compare plus directement les deux types de configuration, pour une résistance électrique R de 175 kΩ, la configuration parallélépipédique Cp impose un volume polarisé de 0.6 $\mu$m³, alors qu'à cette même valeur de résistance électrique, la configuration en boucle circulaire Cbc permet d'obtenir un volume polarisé de 2.6 $\mu m^3$, soit une augmentation de plus de 300%. Inversement, pour un volume polarisé de 1.4 $\mu m^3$, la configuration parallélépipédique Cp impose une résistance électrique de 450 kΩ, alors qu'à cette même valeur de volume polarisé, la configuration en boucle circulaire Cbc permet d'obtenir une résistance électrique de 100 kΩ, soit une diminution de 75%.

Par ailleurs, selon un mode de réalisation, on configure avantageusement la couche thermistance 53 de sorte que le paramètre $Z = R \times h / \rho$ est inférieure ou égale à 0.3 : $Z \leq 0.3$. L'épaisseur h peut être une valeur moyenne dans le cas où la couche thermistance 53 présente une variation d'épaisseur.

En effet, les inventeurs ont pu constater qu'en deçà de cette valeur, la configuration en boucle annulaire permet d'optimiser le ratio entre le volume polarisé effectif et le volume géométrique de la couche thermistance 53, comparé à la configuration parallélépipédique. Le volume polarisé effectif est ici évalué à partir de la distribution spatiale du champ électrique dans la couche thermistance 53. L'optimisation de ce ratio permet d'éviter que la densité de courant ne devienne trop importante au centre de la couche thermistance 53, plus précisément au niveau de la zone centrale de contact 53c. Cela permet en particulier de limiter le bruit en 1/f.

A titre d'exemple, pour la configuration en boucle annulaire, une couche thermistance 53 en oxyde de vanadium d'une résistivité ρ égale à 10 Ω.cm, une épaisseur constante h égale à 80 nm et une résistance R de 300 kΩ, on obtient un paramètre Z de 0.24. De même, pour une couche thermistance en silicium amorphe d'une résistivité ρ de à 70 Ω.cm, une épaisseur constante h de 300 nm et une résistance R de 500 kΩ, on obtient un paramètre Z de 0.21. Dans ces deux exemples, le ratio est meilleur dans le cas de la configuration en boucle annulaire comparé à la configuration parallélépipédique.

Des modes de réalisation particuliers viennent d'être décrits. Différentes variantes et modifications apparaîtront à l'homme du métier.

Ainsi, la figure 6 est une vue de dessus, schématique et partielle, d'un détecteur thermique 1 selon un autre mode de réalisation. Dans cet exemple, le détecteur thermique 1 est similaire à celui de la fig.3A et s'en distingue essentiellement en ce que les électrodes 51, 52 et la couche thermistance 53 présentent une configuration en boucle ouverte rectangulaire (ici carrée).

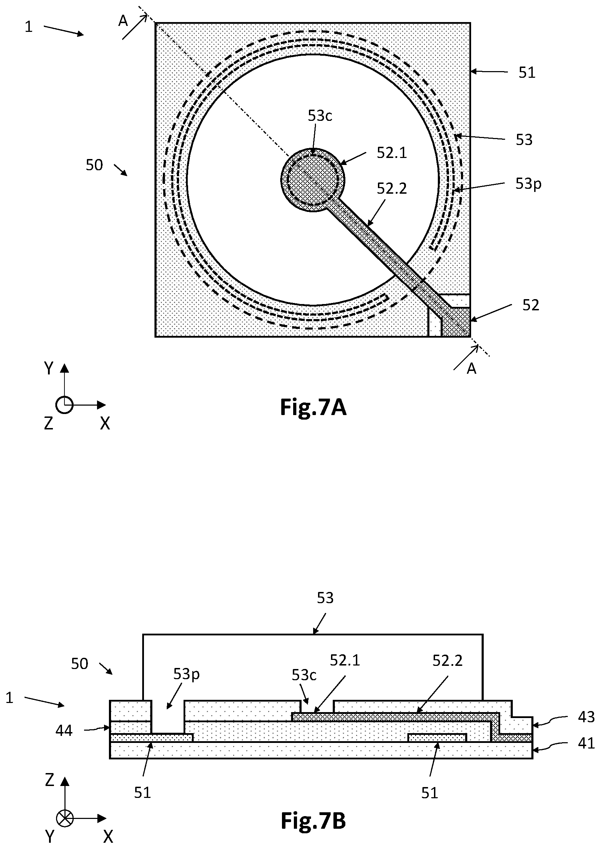

La figure 7A et la figure 7B sont des vues schématique et partielle, respectivement en vue de dessus et en coupe transversale selon la ligne de coupe AA, d'un détecteur thermique 1 selon une autre variante de réalisation. Le détecteur thermique 1 se distingue ici de celui des fig.3A et 3B essentiellement en ce que l'électrode 51 s'étend en boucle fermée, et non pas en boucle ouverte.

L'électrode 51 s'étend continûment le long de la bordure de la membrane absorbante 50. Elle ne présente donc pas l'ouverture angulaire 51.1 illustrée notamment sur la fig.3A.

L'électrode 52 comporte la partie centrale 52.1 et la piste radiale 52.2. Pour éviter tout contact avec l'électrode 51, la piste radiale 52.2 s'étend au-dessus de l'électrode 51, et en est espacée verticalement par une couche mince isolante intercalaire 44. L'électrode 51 et la piste radiale 52.2 ne sont donc pas coplanaires. Par ailleurs, la partie centrale 52.1 de la deuxième électrode 52 est également située au-dessus de l'électrode 51. Elle repose également sur la couche mince isolante intercalaire 44. Enfin, la couche mince isolante supérieure 43 recouvre la deuxième électrode 52 ainsi que la couche mince isolante intercalaire 44.

Des ouvertures forment la zone centrale de contact 53c et la zone périphérique de contact 53p. La zone centrale de contact 53c correspond à une ouverture réalisée au travers de la couche mince isolante supérieure 43 qui débouche sur la partie centrale 52.1 de la deuxième électrode 52. La zone périphérique de contact 53p correspond à une ouverture réalisée au travers de la couche mince isolante supérieure 43 et de la couche mince isolante intercalaire 44 et qui débouche sur la première électrode 51. Le matériau thermistance 53 s'étend dans ces ouvertures pour venir au contact des électrodes 51 et 52. Evidemment, l'ouverture de la zone périphérique de contact 53p s'étend en boucle ouverte pour éviter de venir déboucher sur la piste radiale 52.2.

Notons que cette configuration en boucle fermée est similaire au mode de réalisation de la fig.3A, mais elle pourrait également s'appliquer au mode de réalisation des fig.4A, 5A et 6. Par ailleurs, les électrodes 51 et 52 peuvent être proches l'une de l'autre (en projection dans un plan XY) de manière à se passer d'un absorbeur dédié 54, ou peuvent être éloignées l'une de l'autre de sorte que l'absorbeur 54 est présent.

Comme mentionné précédemment, le détecteur thermique 1 selon cette variante de réalisation présente les mêmes performances améliorées, notamment en termes de NETD, du fait que la configuration géométrique dite en boucle de l'électrode 51 (ici en boucle fermée), et donc de la zone de contact périphérique 53p (en boucle ouverte) de la couche thermistance 53, permet d'optimiser la résistance électrique R de la couche thermistance 53, tout en gardant un volume polarisé V suffisant pour ne pas générer davantage de bruit en 1/f.

Dans cet exemple, l'électrode 52 (partie centrale 52.1 et piste radiale 52.2) s'étend au-dessus de l'électrode 51 en boucle fermée. En variante, l'électrode 52 peut s'étendre en-dessous de l'électrode 51, c'est-à-dire qu'elle est située entre les couches minces isolantes 41 et 44, alors que l'électrode 51 est située entre les couches minces isolantes 44 et 43. Dans ce cas, l'ouverture de la zone périphérique de contact 53p peut s'étendre en boucle fermée car il n'y a pas de risque de venir déboucher sur la piste radiale 52.2.

**Revendications**

1. Détecteur thermique (1), comportant :

   ○ un substrat de lecture (10) ;
   ○ une membrane absorbante (50), suspendue au-dessus du substrat de lecture (10), connectée électriquement et isolée thermiquement de celui-ci, comportant :

   • une première et une deuxième électrodes (51, 52) en couche mince ;
   • une couche thermistance (53), située sur et au contact des électrodes (51, 52) ;

   ○ **caractérisé en ce que** :

   • la première électrode (51) est une piste en boucle s'étendant le long de la périphérie de la membrane absorbante (50) ;
   • la deuxième électrode (52) est formée : d'une partie centrale (52.1), située au centre de la première électrode (51) en boucle, et entourée en partie par celle-ci ; et d'une piste radiale (52.2) allant de la partie centrale (52.1) jusqu'à une bordure de la membrane absorbante (50) ;
   • la couche thermistance (53) présente : une zone périphérique de contact (53p), s'étendant le long de la première électrode (51) en boucle, où elle est au contact de celle-ci ; et une zone centrale de contact (53c), située au centre de la zone périphérique de contact (53p) et entourée en partie par celle-ci, où elle est au contact de la partie centrale (52.1) de la deuxième électrode (52), la couche thermistance (53) étant électriquement isolée de la piste radiale (52.2).

2. Détecteur thermique (1) selon la revendication 1, dans lequel la zone périphérique de contact (53p) présente une bordure intérieure (53pi) parallèle et concentrique à une bordure extérieure (53ce) de la zone centrale de contact (53c).

3. Détecteur thermique (1) selon la revendication 2, dans lequel la bordure intérieure (53pi) de la zone périphérique de contact (53p) et la bordure extérieure (53ce) de la zone centrale de contact (53c) sont circulaires.

4. Détecteur thermique (1) selon la revendication 3, dans lequel la couche thermistance (53) présente une forme circulaire et concentrique à la bordure intérieure (53pi) de la zone périphérique de contact (53p) et à la bordure extérieure (53ce) de la zone centrale de contact (53c).

5. Détecteur thermique (1) selon l'une quelconque des revendications 1 à 4, dans lequel la première électrode (51) présente une bordure intérieure (51i) parallèle et concentrique à une bordure extérieure (52.1e) de la partie centrale (52.1) de la deuxième électrode (52).

6. Détecteur thermique (1) selon la revendication 5, dans lequel la bordure intérieure (51i) de la première électrode (51) et la bordure extérieure (52.1e) de la partie centrale (52.1) de la deuxième électrode (52) sont circulaires.

7. Détecteur thermique (1) selon l'une quelconque des revendications 1 à 6, dans lequel la membrane absorbante (50) comporte une couche mince isolante (43) située entre la couche thermistance (53) et la piste radiale (52.2) de la deuxième électrode (52).

8. Détecteur thermique (1) selon l'une quelconque des revendications 1 à 7, dans lequel la partie centrale (52.1) de la deuxième électrode (52) est située au centre de la membrane absorbante (50).

9. Détecteur thermique (1) selon l'une quelconque des revendications 1 à 8, dans lequel la couche thermistance (53) et les électrodes (51, 52) sont configurées de sorte qu'un paramètre $Z = R \times h / \rho$ est inférieure ou égale à 0.3, où R est la résistance électrique de la couche thermistance (53), h son épaisseur moyenne, et $\rho$ la résistivité du matériau de la couche thermistance (53).

10. Détecteur thermique (1) selon l'une quelconque des revendications 1 à 9, dans lequel la première électrode (51) et la piste radiale (52.2) de la deuxième électrode (52) sont coplanaires, la première électrode (51) s'étendant en boucle ouverte qui comporte une ouverture (51.1) dans laquelle s'étend la piste radiale (52.2).

11. Détecteur thermique (1) selon la revendication 10, dans lequel la couche thermistance (53) présente une échancrure angulaire (53.1) située à la perpendiculaire de l'ouverture (51.1) de la première électrode (51).

12. Détecteur thermique (1) selon l'une quelconque des revendications 1 à 9, dans lequel la première électrode (51) et la piste radiale (52.2) de la deuxième électrode (52) ne sont pas coplanaires, la première électrode (51) s'étendant en boucle fermée, la piste radiale (52.2) étant espacée verticalement de la première électrode (51) par une couche mince isolante intercalaire (44).

**Fig.1A**

**Fig.1B**

**Fig.2**

**Fig.3A**

**Fig.3B**

**Fig.4A**

**Fig.4B**

**Fig.5A**

**Fig.5B**

**Fig.6**

1

A

50

53c

52.1

52.2

53

53p

51

52

A

Y

Z    X

**Fig.7A**

53

50

1

53p

53c

52.1

52.2

43

44

41

51

51

Z

Y    X

**Fig.7B**

| | Europäisches Patentamt European Patent Office Office européen des brevets | **RAPPORT DE RECHERCHE EUROPEENNE** | **Numéro de la demande** EP 25 18 2226 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 524 507 A1 (ULIS [FR]) 20 avril 2005 (2005-04-20) * figure 5 * ----- | 1-12 | INV. G01J5/02 G01J5/20 |
| A | US 2010/148067 A1 (CHEON SANG HOON [KR] ET AL) 17 juin 2010 (2010-06-17) * le document en entier * ----- | 1-12 | |

**DOMAINES TECHNIQUES RECHERCHES (IPC)**

G01J

Le présent rapport a été établi pour toutes les revendications

| Lieu de la recherche | Date d'achèvement de la recherche | Examinateur |
|---|---|---|
| Munich | 4 septembre 2025 | Parise, Berengere |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 18 2226

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-09-2025

| Document brevet cité au rapport de recherche | | Date de publication | Membre(s) de la famille de brevet(s) | | Date de publication |
|---|---|---|---|---|---|
| EP  1524507 | A1 | 20-04-2005 | CA | 2481056 A1 | 15-04-2005 |
| | | | CN | 1727856 A | 01-02-2006 |
| | | | EP | 1524507 A1 | 20-04-2005 |
| | | | FR | 2861172 A1 | 22-04-2005 |
| | | | RU | 2356017 C2 | 20-05-2009 |
| | | | US | 2005082481 A1 | 21-04-2005 |
| US 2010148067 | A1 | 17-06-2010 | KR | 20100069047 A | 24-06-2010 |
| | | | US | 2010148067 A1 | 17-06-2010 |

EPO FORM P0460

Pour tout renseignement concernant cette annexe : voir Journal Officiel de l'Office européen des brevets, No.12/82